# EUROPEAN PATENT APPLICATION

(11) **EP 2 634 453 A1**
(43) Date of publication of application: **04.09.2013**
(21) Application number: 12182442.9
(22) Date of filing: 30.08.2012
(51) Int. Cl.: F16F 15/32, G01M 1/32

(54) **Belt for Transport and Dispension of Balancing Weights**

(30) Priority: 29.02.2012 US 201213408183
(71) Applicant: Bode, Felix, 97209 Veitshöchheim (DE)
(72) Inventor: Bode, Felix, 97209 Veitshöchheim (DE)
(74) Representative: Jöstingmeier, Martin

(57) **Abstract**

Clip-on balancing weights (10) for cars are disclosed, having at least a first and a second side, opposing each other. Both sides have compatible means for connecting a first balancing weight with its first side to a second balancing weight with its second side, forming a chain of balancing weights.

## Description

### Field of the invention

The invention relates to balancing weights and belts of balancing weights and devices for handling and transporting weights used in vehicle balancing applications, in particular for dispensing weights used in balancing automobile or other vehicle wheels.

### Description of the related art

In automotive wheel balancing, individual wheel balancing weights are applied to specific positions of a rim. Basically, two types of balancing weight are used. The first kind is a balancing weight which is attached by a clamp, as disclosed in the European patent EP 1 613 876 B1, while the second kind is fixed by means of a self-adhesive tape, as disclosed in US patent 6,364,421 B1.

Both kinds of balancing weights are available in a plurality of sizes, resulting in different weights. When balancing a vehicle wheel, the correct size of balancing weight is selected and attached to the rim. Most balancing weights are supplied as bulk material in boxes, from which the required number of weights is manually taken.

This allows for a simple, comparatively cheap supply of balancing weights. The drawback is that the person who is taking the weights from the box may take a wrong weight, and therefore a further step of balancing is required. Furthermore, the process of taking the weights can hardly be automated. Therefore, other solutions as disclosed in WO 2008/103651 A1, using a continuous polymer tape, have been developed. This has the drawback that a solid balancing weight is significantly more robust and reliable than these continuous tapes.

### Summary of the invention

The problem to be solved by the invention is to provide balancing weights and a belt of balancing weights to improve automated transport and dispension of vehicle balancing weights and to provide a method for automated transport and dispension of vehicle balancing weights.

Solutions of the problem are described in the independent claims. The dependent claims relate to further improvements of the invention.

A first aspect of the invention relates to a belt for balancing weights and to balancing weights for automated transport. Such balancing weights preferably comprising zinc, steel, plumb or plastic, are attached to a transport tape or belt which may preferably be an adhesive tape for attaching the balancing weights to a rim. In a first embodiment, the balancing weights are individual weights at a distance from each other to allow for bending of the tape at least one axis, preferably at two axes under a right angle. In a further embodiment there are clip-on balancing weights known from the art attached to a tape or belt.

In a further embodiment, the balancing weights are connected by at least one connecting element. Such a connecting element may be, a dove tail, a bolt or a pin or any other kind of coupling. A connecting element preferably is from the same material as the balancing weights. Most preferably the connecting elements may be separated without destruction of the connecting elements. Most preferably the connecting elements can be reconnected after separation. Preferably the balancing weights may also be supported by a tape which also may serve as an adhesive tape. Generally, a tape support of balancing weights connected by a coupling may not be necessary. In a further embodiment the connecting element may comprise a material, preferably a material which is used for covering the surface of the balancing weights. This may be any polymer like e poxy.

In a further embodiment, the balancing weights may be located on at least one tape, preferably a self-adhesive tape. Most preferably, there is at least one top tape layer to which the balancing weights are attached. They may be glued or molded to the tape. Preferably at least one comparatively soft layer is provided which may comprise a foam material to compensate for deviations of the rim surface. Furthermore any of the layers disclosed herein may have at least one adhesive coating to provide a sufficient adhesive strength to a neighboring layer, a balancing weights or the rim.

In a further embodiment, there is at least a second tape layer attached to the first tape layer. Preferably, the second tape layer is a different kind of tape as the first tape layer.

In a further embodiment, there is at least one support layer provided to bear the balancing weights. Preferably, this support layer is a rigid or semi-rigid layer. This layer may be a sheet, foil, or tape of any material, preferably of metal, e.g. aluminum or a reinforced plastic material. Most preferably, this layer comprises a glass fiber or carbon fiber reinforced plastic material. This layer may also comprise a grid or mesh which may also be of metal or plastic, preferably a glass or carbon fiber reinforced plastic. This layer gives the whole assembly of tapes and weights some stiffness and prevents bending when the belt comprising of the tape and the balancing weights is transported from a dispenser and handed over to a robot or a person for being attached to a wheel rim as one piece. The support layer may be used alone or in conjunction with other layers.

According to a further embodiment of the invention, the support layer may be cut together with the other layers of the tape by a dispensing apparatus when dispensing balancing weights. The dispensing apparatus may cut sections containing a required number of balancing weights from an endless belt. If, for example, a total weight which is equal to three balancing weights is required, a dispensing apparatus would cut a section having three balancing weights off the belt. This section is a comparatively solid and stiff unit, although it comprises of three individual balancing weights. Therefore, the section can be handled as one piece.

Preferably, the support layer is embedded within at least two tape layers. This results in additional stiffness. In another embodiment, the support layer may be the top layer beyond the balancing weights. It is preferred, if in this case the support layer is glued, bonded, welded, or soldered to the balancing weights, resulting in a long-lasting reliable connection between the balancing weights and the support layer. The balancing weights according to the various embodiments may be attached to a rim by different methods. Generally, there are two types of balancing weights and related attachment methods known from the prior art. First, there are balancing weights which are glued by a self-adhesive tape to the rim. This type of balancing weights can now be automatically processed as one piece, even if there is a plurality of balancing weights which has to be attached to the rim next to each other. In such a case, for example if a total balancing weight of 15 grams is required and the tape contains balancing weights having 5 grams each, a section with three balancing weights will be cut from the belt. Due to the comparatively stiff connection between the balancing weights by couplings and/or support layer, this section comprising three balancing weights can be handled as one unitary piece, for example by a robot. The section may be automatically picked and placed to the rim in one processing step.

A further embodiment relates to clip-on balancing weights. Here also, a plurality of balancing weights may be cut off from the belt in one contiguous section. In the previously mentioned example, a section of three clip-on balancing weights may be cut from the belt and picked and placed by a robot. After placing the section to the rim, a clip may be placed on at least one of the balancing weights to securely fix the balancing weight to the rim. In this example, preferably a clip is placed on the center balancing weight. If there is an additional self-adhesive tape under the balancing weights, this self-adhesive tape may give sufficient support on the rim to hold the neighbored balancing weights in place. In an embodiment without self-adhesive tape, the connection between the balancing weights may be stiff enough to hold the other balancing weights in place. In an alternate embodiment, the both outmost balancing weights would be secured by clips. In this case, the center balancing weight may be held by its neighboring balancing weights and it may be additionally held by the self-adhesive tape. In a preferred embodiment, there would be a securing clip on each of the balancing weights. In this example, there would be three securing clips on all three balancing weights. However, the most preferred embodiment could be one clip. It is to be understood that the embodiments which are shown by the previous example based on three balancing weights may be applied to any other number of balancing weights.

### Description of Drawings

In the following the invention will be described by way of example, without limitation of the general inventive concept, on examples of embodiment with reference to the drawings.
Fig. 1 shows a first embodiment of balancing weights.
Fig. 2 shows the first embodiment in a side view.
Fig. 3 shows a second embodiment of the balancing weights.
Fig. 4 shows the second embodiment in a side view.
Fig. 5 shows a third embodiment of balancing weights.
Fig. 6 shows a third embodiment in a side view.
Fig. 7 shows small clip-on balancing weights.
Fig. 8 shows small clip-on balancing weights in a side view.
Fig. 9 shows chained small clip-on balancing weights.
Fig. 10 shows chained small clip-on balancing weights in a side view.
Fig. 11 shows a further embodiment of the balancing weights.
Fig. 12 shows a spring clip.
Fig. 13 shows another embodiment of balancing weights.
Fig. 14 shows a trapezoidal cross-section balancing weights in a side view.
Fig. 15 shows another embodiment of balancing weights.
Fig. 16 shows the previous balancing weights in a side view.
Fig. 17 shows a clip-on balancing weight strand.
Fig. 18 shows a clip-on balancing weight strand in a side view.
Fig. 19 shows a balancing weight strand.
Fig. 20 shows a balancing weight strand in a side view.
Fig. 21 shows a detail of a balancing weight tape layer.
Fig. 22 shows a different set of layers in detail.
Fig. 23 shows parts of the layers.
Fig. 24 shows a sectional view of the figures 17 and 18.
Fig. 25 shows a reel with a belt of balancing weights.

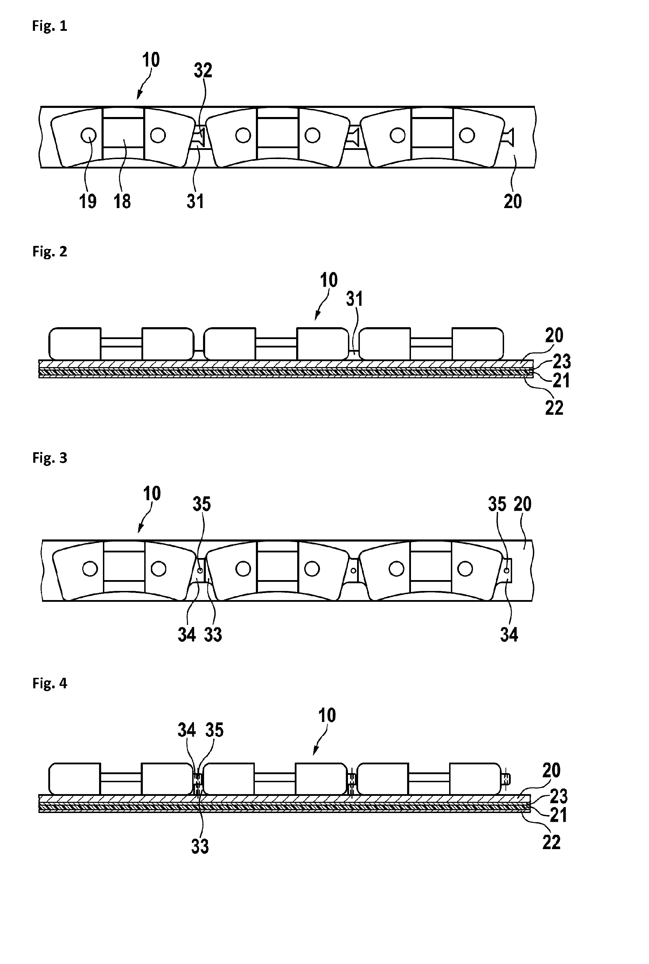

In Fig. 1, a preferred embodiment according to the invention is shown. Balancing weights 10 are supported by a tape 20 which may be a self-adhesive tape. The assembly of balancing weights on a tape is herein referred as a belt. Preferably, the balancing weights 10 have at least one grip hole 19. Preferably, there are two grip holes 19 provided according to a generally known industrial standard. Furthermore, it is preferred to have at least one clip lock surface 18 on top of the balancing weight. This clip lock surface is a contact surface for a spring clip to be clipped on the rim and the balancing weight to secure the balancing weight to the rim. Furthermore, a dovetail connection element 31, 32 is provided to interconnect neighboring balancing weights 10. Individual balancing weights may be separated by pushing them apart, therefore separating the dovetail connection.

In Fig. 2, the embodiment of Fig. 1 is shown in a side view. The balancing weights 10 are on top of a first top tape layer 20. It is preferred, if there is at least one support layer 23 below the top tape layer 20. Preferably, the support layer is of a comparatively stiff material. The support layer may be of metal or plastic material, preferably it comprises of a fiber reinforced plastic material, most preferably of carbon fiber or glass fiber reinforced plastic material. It may also comprise of a mesh or grid. It is further preferred, if there is a bottom tape layer 21 beyond the support layer 23, which may be a self-adhesive tape and allows fixing of the tape together with the balancing weights to the rim. A liner 22 may be provided to protect the self-adhesive surface of bottom tape layer 21. Generally, the support layer 23 stiffens the belt and allows handling of any section of the belt as one piece. The support layer 23 may be used alone or in conjunction with other layers. Preferably at least one comparatively soft layer is provided which may comprise a foam material to compensate for deviations of the rim surface. Furthermore any of the layers disclosed herein may have at least one adhesive coating to provide a sufficient adhesive strength to a neighboring layer, a balancing weights or the rim.

In Fig. 3, a second embodiment of the balancing weights 10 on a tape 20 is shown. The individual balancing weights 10 are interconnected by couplings 33, 34 which may be secured by a bolt or pin 35. For separating individual balancing weights, this bolt may be easily removed.

In Fig. 4, the second embodiment is shown in a side view. The preferred arrangement of various layers comprising tapes, support layer and liner may be similar as described above.

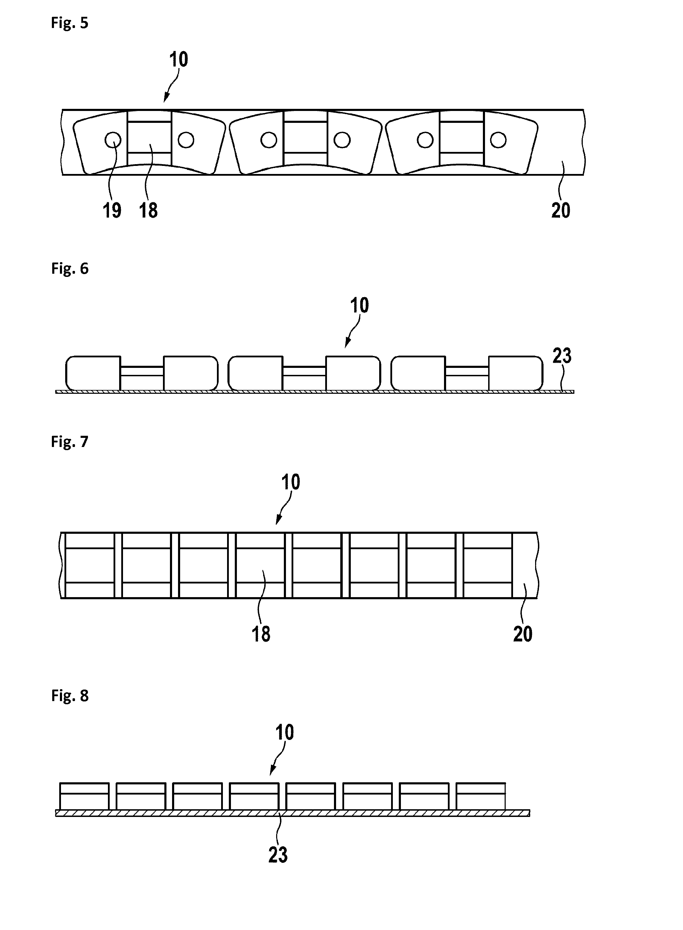

In Fig. 5, a third embodiment of balancing weights is shown. The balancing weights are similar to the balancing weights of the previous embodiment, but there is no interconnecting means at the balancing weights themselves. Instead, the balancing weights are interconnected by a support layer 23. This support layer 23 gives the belt enough stability and strength to hold the balancing weights together. Preferably, the support layer 3 is combined with at least one tape layer 20, 21 as disclosed above.

In Fig. 6, a third embodiment is shown in a side view. In this figure, there is only support layer 23 to connect the individual balancing weights 10. This support layer 23 may be connected to the balancing weights by gluing, welding, soldering, or any other method. The balancing weights may even by screwed to the support layer. In further embodiments, the support layer may be combined with at least one tape layer.

In Fig. 7 small clip-on balancing weights 10 are shown in top view. These balancing weights only have clip lock sections 18 to interface with a clip for attaching the weights to a rim. This clip lock section is the minimum requirement for a clip on weight. By reducing clip-on weights to this minimum, the weights may be subdivided into comparatively small portions which may be 5 g or 10 g. Due to the stabilizing layer which may be below the top tape layer 20 shown herein, any number of balancing weights may be handled and attached to the rim as one unit.

In Fig. 8 the previous clip on balancing weights are shown in a side view. Here for example only one stabilizing layer 23 is shown.

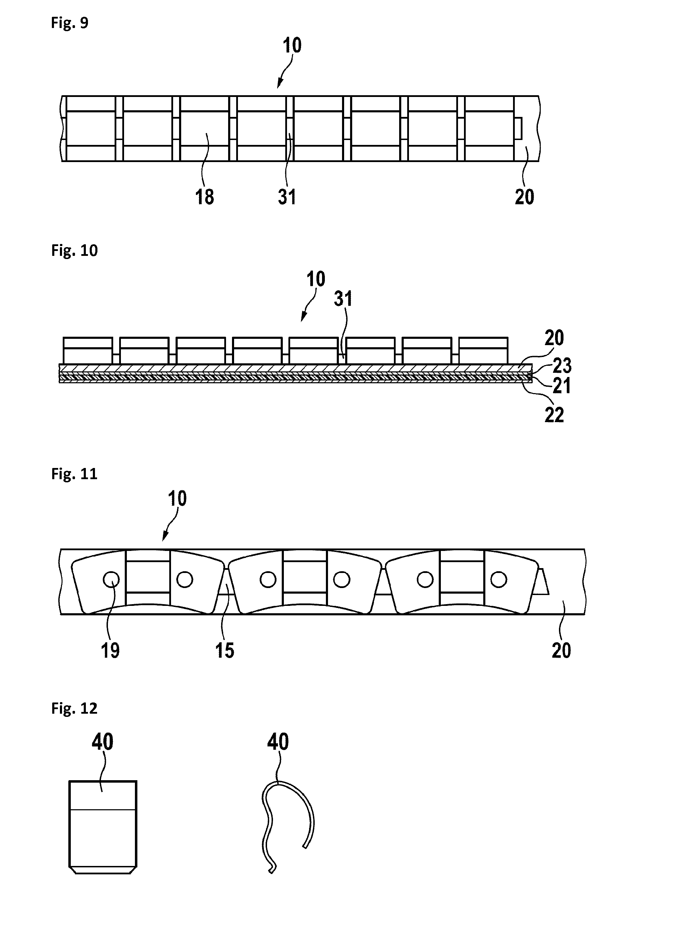

In Fig. 9 small clip on balancing weights 10 are shown which are interlinked by some a dove tail 31 or any other link, which may also be fixed link, preferably of the same material as the balancing weights or a coating thereof.

In Fig. 10 the previous balancing weights are shown in a side view. Here again, the balancing weights are supported by a top tape layer 20, supporting layer 23, bottom tape layer 21 and liner 22.

In Fig. 11, a further embodiment of the balancing weights is shown. Herein, the balancing weights are connected by means of a fixed connecting element. Preferably, this is of the same material as the balancing weights. Most preferably, the balancing weights have been manufactured in one process like molding, by which also the fixed connecting elements have been manufactured.

In Fig. 12 a spring clip is shown, which may be used to fix a balancing weight to a rim.

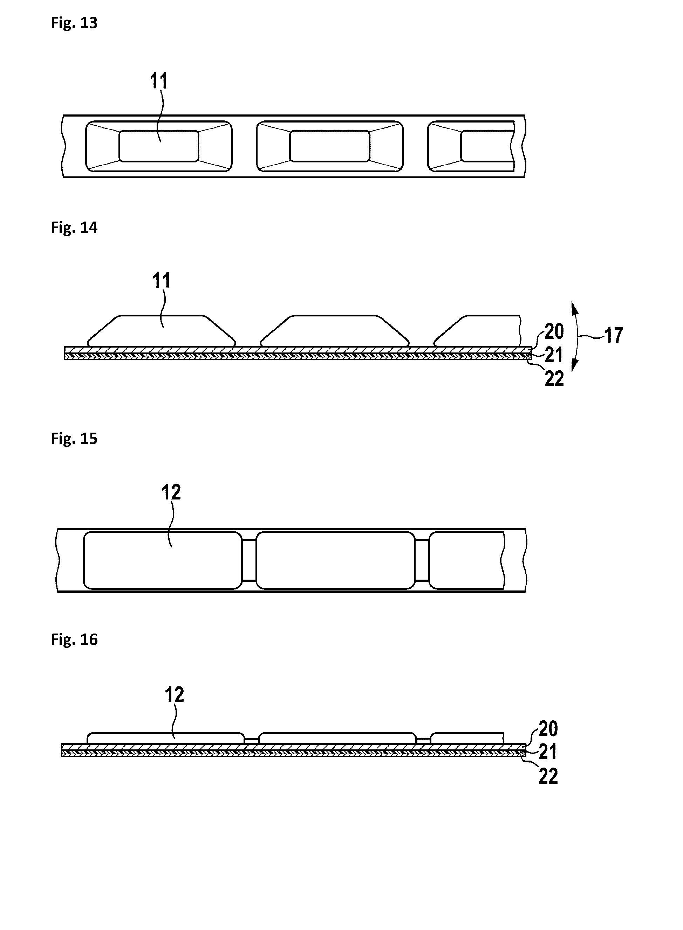

In Fig. 13, another embodiment of balancing weights 11 having a trapezoidal cross-section is shown.

In Fig. 14, the previously shown balancing weights are shown in a side view. It is preferred to combine these balancing weights with any one of the tape layers, support layers, liners, and other layers as disclosed herein. Due to the trapezoidal design, this belt has some higher degree of flexibility in bending direction 17. Generally, all the embodiments described in this document should have a certain minimum stiffness in this bending direction 17 to allow automated and simplified handling, but they can intentionally be bent by applying a force.

In Fig. 15, another embodiment of balancing weights is shown. Here, balancing weights 12 are comparatively flat and have fixed connecting elements in-between.

In Fig. 16, shows the previous balancing weights in a side view.

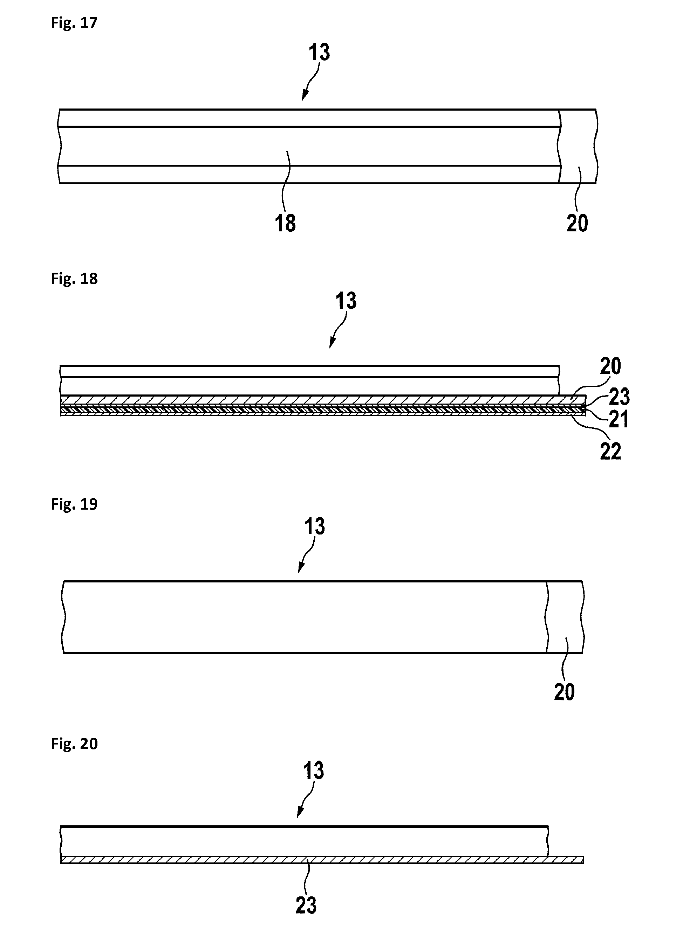

In Fig. 17 a clip-on balancing weight strand is shown. Segments or pieces of this strand may be held by spring clip 40 to a rim. Pieces of a length corresponding to a desired weight may be cut off a preferably continuous strand and attached by using at least one spring clip 40 to a rim.

In Fig. 18 the clip-on balancing weight strand is shown in a side view.

In Fig. 19 shows a clip-on balancing weight strand which is attached to the rim by the self-adhesive tape only.

In Fig. 20 the balancing weight strand is shown in a side view.

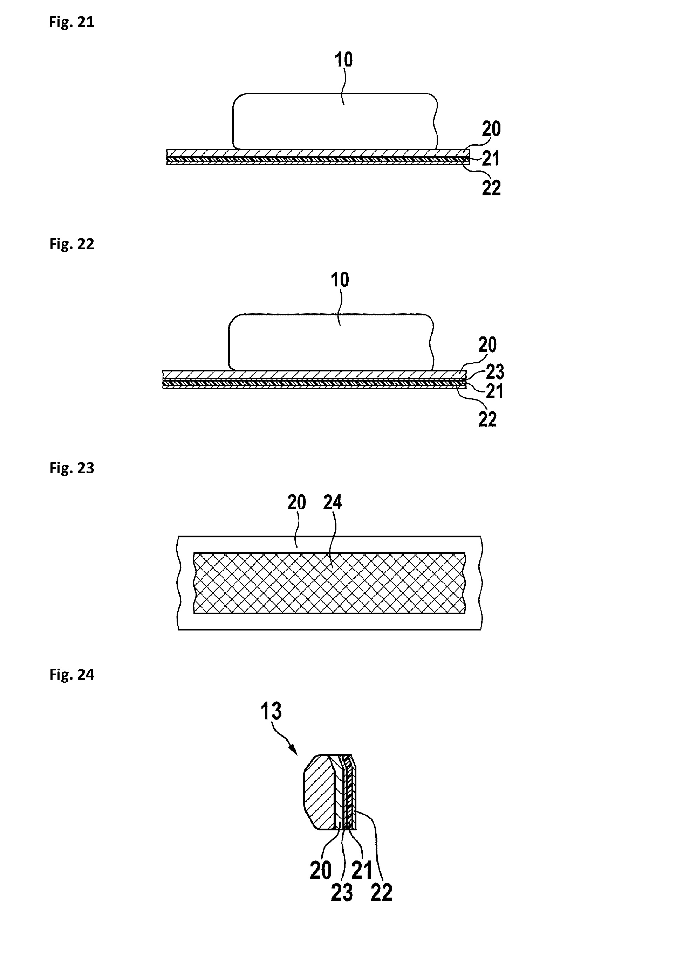

In Fig. 21, a balancing weight is shown on different tape layers. The balancing weight 10 is attached to top tape layer 20. Below this top tape layer 20 is bottom tape layer 21. This is furthermore protected by liner 22. Preferably, bottom tape layer 21 is a self-adhesive tape, while top tape layer 20 may be a comparatively stiff and inflexible tape.

In Fig. 22, a different set of layers is shown in detail. A balancing weight 10 is attached to top tape layer 20. Below this layer is support layer 23 which comprises of a comparatively stiff material. Below this layer is bottom tape layer 21, which preferably is a self-adhesive tape. This is furthermore protected by liner 22.

In Fig. 23, parts of the layers are shown. Here, a mesh 24 is located on bottom side top tape layer 20. Generally, this mesh may be support layer 23. Instead of this mesh, any other material forming support layer 23 may be placed. It is preferred, if this mesh or any other material functioning as support layer does not extend to the sides of the top tape layer, but is smaller in width. This allows a protection of the mesh by the top tape layer and preferably by the bottom tape layer which is attached to the top tape layer.

Fig. 24 shows a sectional view of the figures 17 and 18. This profile generally has the sme form as clip lock 18 and may be held by the spring clip 40 of Fig. 12 to a rim.

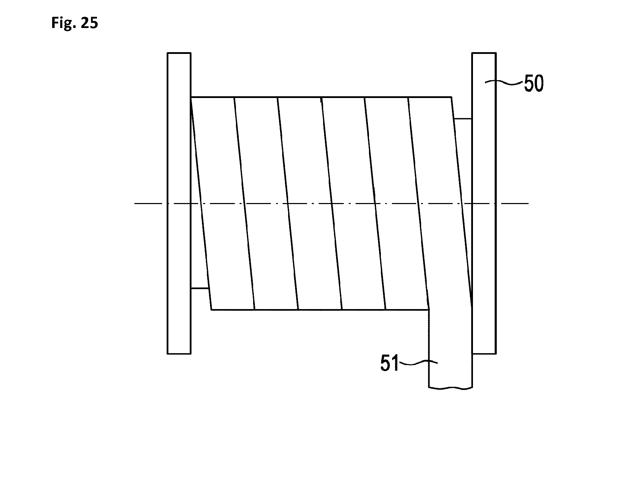

Fig. 25 shows a reel with a belt 51 of balancing weights. It is preferred, if the balancing weights are bent to a standard radius of 160 mm preferably within a tolerance of ± 20%. Preferably they are wound up on a reel 50 providing such a radius. There may even be a second or third layer of balancing weights having a smaller or larger radius if the radius is within the tolerance range. These pre-bent balancing weights can easily be applied to a rim with only minor bending.

### List of reference numerals

- 10: balancing weight
- 11: trapezoidal balancing weight
- 12: flat balancing weight
- 13: balancing weight strand
- 15: fixed connecting element
- 17: bending direction
- 18: clip lock
- 19: grip hole
- 20: top tape layer
- 21: bottom tape layer
- 22: liner
- 23: support layer
- 24: mesh
- 31, 32: dovetail
- 33,34: coupling
- 35: bolt
- 40: spring clip
- 50: reel
- 51: balancing weights on tape

## Claims

1. Balancing weights (10) for cars, having at least a first and a second side, opposing each other, both sides having compatible means for connecting a first balancing weight with its first side to a second balancing weight with its second side, forming a chain of balancing weights.

2. Balancing weights (10) according to claim 1,
**characterized in, that**
the balancing weight is a clip-on balancing weight.

3. Balancing weights (10) according to claim 1,
**characterized in, that**
at least one means for connecting is a dovetail.

4. Balancing weights (10) according to claim 1,
**characterized in, that**
at least one means for connecting is a coupling using a bolt or pin.

5. Belt of balancing weights (10) for cars, comprising a plurality of individual balancing weights fixedly attached to a support layer (23).

6. Balancing weights (10) according to claim 5,
**characterized in that**
the balancing weight is a clip-on balancing weight.

7. Belt according to claim 5,
**characterized in, that**
the support layer (23) comprises of a metal plate, a metal sheet, metal foil, or metal grid.

8. Belt according to claim 5,
**characterized in, that**
the support layer (23) comprises a plastic material.

9. Belt according to claim 5,
**characterized in, that**
the support layer (23) comprises a fiber reinforced plastic material.

10. Belt according to claim 5,
**characterized in, that**
the support layer (23) comprises a glass fiber or carbon fiber reinforced material.

11. Belt according to claim 5,
**characterized in, that**
the support layer (23) comprises aluminum.
